# EUROPÄISCHE PATENTSCHRIFT

(11) **EP 2 388 733 B1**
(45) Veröffentlichungstag und Bekanntmachung des Hinweises auf die Patenterteilung: **19.11.2014**
(21) Anmeldenummer: 11163216.2
(22) Anmeldetag: 20.04.2011
(51) Int. Cl.: G06K 7/10, G06K 19/077, H04B 5/02

(54) **Elektronisches Datenübertragungsgerät mit einem Sicherheitsmodul**
Electronic data transfer device with a security module
Appareil de transmission de données électronique doté d'un module de sécurité

(30) Priorität: 21.05.2010 DE 102010021236
(43) Veröffentlichungstag der Anmeldung: 23.11.2011
(73) Patentinhaber: Cardag Deutschland GmbH, 99848 Wutha-Farnroda (DE)
(72) Erfinder: Schmidt, Frank, 99891 Fischbach (DE)
(74) Vertreter: Liedtke, Markus

(56) Entgegenhaltungen:
- WO-A2-2009/147548
- DE-A1-102005 062 950
- US-A1- 2008 084 177
- US-A1- 2010 009 627
- US-A1- 2010 069 117
- US-B2- 8 061 609

## Beschreibung

Die Erfindung betrifft ein elektronisches Datenübertragungsgerät mit einem als eine entnehmbare Einheit ausgebildeten Sicherheitsmodul nach den Merkmalen des Oberbegriffs des Anspruchs 1.

Aus dem Stand der Technik ist, wie in der DE 103 56 676 A1 beschrieben, ein elektronisches Gerät mit einem als eine entnehmbare Einheit ausgebildeten Sicherheitsmodul bekannt. Das Sicherheitsmodul ist über standardisierte Kontaktflächen mit dem Gerät galvanisch verbunden und weist eine Einrichtung zur kontaktlosen Datenübertragung über eine erste Antenne auf, welche außerhalb des Sicherheitsmoduls angeordnet ist.

In der WO 2009/121771 1A wird eine Uhr mit einer entnehmbaren Smartcard beschrieben. Die Uhr weist ein Armband und ein Uhrengehäuse mit dem Uhrmechanismus und einem seitlichen Karteneinschubschacht auf. Der Uhrmechanismus und die Smartcardeinheit sind in verschiedenen, gegeneinander abgedichteten Bereichen des Uhrengehäuses angeordnet. Des Weiteren weist die Uhr einen USB-Anschluss für einen externen Datenaustausch auf.

Aus der US 2007/0173123 A1 ist ein SIM-Kartenhalter mit einer metallischen flexiblen Antenne bekannt. Der SIM-Kartenhalter ist auf einer Einschubkarte für einen Computer angeordnet und mit dieser elektrisch kontaktiert. Die Einschubkarte weist eine externe Antennenbuchse auf. Die Antennencharakteristik einer an der Antennenbuchse angeschlossenen externen Antenne kann über die Antenne des SIM-Kartenhalters beeinflusst werden.

Aus der US 2007/0293155 A1 ist ein Chipsatz für ein mobiles Bezahlsystem bekannt, der kontaktlos an eine RFID Antenne gekoppelt ist. Der Chipsatz umfasst eine Vielzahl von passiven Komponenten und einen Kartenhalter zur Aufnahme einer SIM-Karte. Der Chipsatz ist zur Verwendung in einem elektronischen Datenübertragungsgerät, wie insbesondere einem Mobiltelefon geeignet.

Aus der DE 199 16 308 A1 ist ein Schlüsselanhänger zur Bedienung eines Kraftfahrzeuges bekannt, der u. a. einen Transponder und einen Sender umfasst. Der Schlüssel findet Verwendung als Parkgeldspeicher und zur Parkzeitüberwachung. Insbesondere ist der Schlüsselanhänger zur berührungslosen Kommunikation mit einem Parkscheinautomaten geeignet.

In der GB 2 436 908 A ist ein Schlüsselanhänger beschrieben, der sich zum Wiederauffinden verlegter Schlüssel eignet. Eine mit einer Telefonnummer verknüpfte SIM-Karte ist in den Schlüsselanhänger einsetzbar, so dass an den Schlüsselanhänger über ein Mobilfunknetz ein Signal gesendet werden kann. Bei Empfang des Signals erzeugt der Schlüsselanhänger ein akustisches Warnsignal, um das Wiederauffinden des Schlüssels zu erleichtern.

Aus der US 2010/0009627 A1 sind eine NFC-Kommunikationseinheit und ein Verfahren zur Datenkommunikation bekannt. Die Kommunikationseinheit weist ein Gehäuse und eine als entnehmbare Einheit ausgebildete SIM-Karte sowie eine Transpondereinheit mit einer Sende- und/oder Empfangseinheit und weiteren Bauelementen auf. Die SIM-Karte ist, wenn sie in die Kommunikationseinheit eingesetzt ist, mit der Sende- und/oder Empfangseinheit und mit den weiteren Bauelementen und/oder mit einer Energiequelle galvanisch verbunden. Die Kommunikationseinheit kann in Form eines Schlüsselanhängers realisiert werden.

In der US 8,061,609 B2 wird ein Kartenleser für eine elektronische Einrichtung beschrieben. Der Kartenleser umfasst Kontaktelemente, welche sich von einer Leiterplatte nach außen erstrecken. Diese Kontaktelemente sind mittels Schraubenfedern gegenüber der Leiterplatte vorgespannt. Aus der DE 10 2005 062 950 A1 ist ein Gehäuse für einen Schlüsselanhänger bekannt, welches in einem Niederdruck-Übergießverfahren hergestellt wird.

Der Erfindung liegt die Aufgabe zu Grunde, ein verbessertes elektronisches Datenübertragungsgerät mit einem als eine entnehmbare Einheit ausgebildeten Sicherheitsmodul anzugeben.

Die Aufgabe wird erfindungsgemäß gelöst durch ein elektronisches Datenübertragungsgerät mit einem als eine entnehmbare Einheit ausgebildeten Sicherheitsmodul mit den Merkmalen des Anspruchs 1.

Vorteilhafte Ausgestaltungen der Erfindung sind Gegenstand der Unteransprüche.

Ein erfindungsgemäßes elektronisches Datenübertragungsgerät weist ein als entnehmbare Einheit ausgebildetes Sicherheitsmodul und ein als Schlüsselanhänger ausgebildetes Gehäuse auf. Im Gehäuse ist eine Transpondereinheit angeordnet, die ein Substrat umfasst, auf welchem eine Sende- und/oder Empfangseinheit und weitere aktive und/oder passive elektronische Bauelemente angeordnet sind, wobei ein Halter für das Sicherheitsmodul auf dem Substrat angeordnet und/oder als eine Gehäuseausformung ausgebildet ist und wobei das Sicherheitsmodul, wenn es in den Halter eingesetzt und fixiert ist, mit der auf dem Substrat angeordneten Sende- und/oder Empfangseinheit und den weiteren aktiven und/oder passiven elektronischen Bauelementen und/oder mit einer Energiequelle galvanisch verbunden ist. Kontakte zur galvanischen Verbindung des Sicherheitsmoduls mit der Sende- und/oder Empfangseinheit, mit den weiteren aktiven und/oder passiven elektronischen Bauelementen und/oder mit der Energiequelle sind als Federelemente ausgebildet und am Substrat und/oder am Halter befestigt. Das Gehäuse, das Substrat und/oder der Halter ist/sind mittels eines Spritzgießverfahrens aus Kunststoff gefertigt.

Auf diese Weise ist beispielsweise eine Zahl- oder Buchungsfunktion oder eine Identifikationsfunktion realisierbar, zum Beispiel für eine Zugangskontrolle zu einem Gebäude, einem Fahrzeug, einem öffentlichen Transportmittel, einem Gelände, einem System oder einer Maschine oder Vorrichtung. Dabei ist die Transpondereinheit über das Sicherheitsmodul steuerbar und/oder regelbar und/oder es ist ein Zugang zur Transpondereinheit zur Datenübertragung von der Transpondereinheit und/oder zur Transpondereinheit und/oder über die Transpondereinheit absicherbar. Das erfindungsgemäße elektronische Datenübertragungsgerät und dessen Ausführungsformen sind sehr einfach und kostengünstig herstellbar. Eine ordnungsgemäße und zuverlässige Funktion über einen langen Einsatzzeitraum ist sichergestellt, insbesondere aufgrund der störunanfälligen galvanischen Verbindung zwischen dem Sicherheitsmodul und der Sende- und/oder Empfangseinheit.

Das Sicherheitsmodul ist beispielsweise als eine Ausstanzung aus einer so genannten ID 1-Chipkarte ausgebildet, zum Beispiel in Form einer ID-000-Chipkarte, auch als SIM-Karte oder Plug-Karte bezeichnet. Es sind jedoch, je nach Erfordernissen und Einsatz- und Verwendungszweck auch andere, kleinere oder größere Formen vorteilhaft einsetzbar.

Zur galvanischen Verbindung weist das Sicherheitsmodul ein oder mehrere Anschlüsse zur Kontaktierung einer internen Schaltung des Sicherheitsmoduls, wie beispielsweise eines Halbleiters, mit der Transpondereinheit, insbesondere mit dessen Sende- und/oder Empfangseinheit auf. Das Substrat, auf welchem die Transpondereinheit und bevorzugt auch der Halter angeordnet sind, kann als eigenständiges Bauteil ausgebildet sein, welches im Gehäuse befestigt ist, oder es kann als Teil des Gehäuses, beispielsweise auf einer Gehäuseinnenseite ausgebildet sein.

Das elektronische Datenübertragungsgerät bzw. dessen Gehäuse kann in einer Vielzahl von Formen und für eine Vielzahl von Funktionen ausgebildet sein. Besonders bevorzugt ist das elektronische Datenübertragungsgerät bzw. das Gehäuse als ein Schlüsselanhänger ausgebildet. Auf diese Weise ist das elektronische Datenübertragungsgerät, da es klein und leicht ist und an beispielsweise täglich benötigten Schlüsseln befestigbar ist, stets mitführbar und ist, wenn benötigt, stets griffbereit.

Zweckmäßigerweise ist die Sende- und/oder Empfangseinheit je nach Einsatz- und Verwendungszeck als eine Antenne, als eine induktive Sende- und/oder Empfangseinheit und/oder als eine kapazitive Sende- und/oder Empfangseinheit ausgebildet, um eine drahtlose Kommunikationsverbindung zu ermöglichen. Eine induktive Sende- und/oder Empfangseinheit ist als eine Spule ausgebildet, d. h. als ein offener Transformator. Eine kapazitive Sende- und/oder Empfangseinheit weist eine oder mehrere leitende Flächen auf, welche als Kondensatorplatten wirken.

Vorzugsweise ist das Sicherheitsmodul, wenn es in den Halter eingesetzt und fixiert ist, mit den weiteren aktiven und/oder passiven elektronischen Bauelementen und/oder mit einer Energiequelle galvanisch verbunden. Die Energiequelle ist zweckmäßigerweise im elektronischen Datenübertragungsgerät, d. h. innerhalb des Gehäuses oder am Gehäuse angeordnet. Über die galvanischen Verbindungen ist eine Daten- und/oder eine Energieübertragung ermöglicht.

Bevorzugt sind Kontakte zur galvanischen Verbindung des Sicherheitsmoduls mit der Sende- und/oder Empfangseinheit, mit den weiteren aktiven und/oder passiven elektronischen Bauelementen und/oder mit der Energiequelle als Federelemente ausgebildet und am Substrat und/oder am Halter befestigt. Durch die als Federelemente ausgebildeten Kontakte, welche beispielsweise als Federstifte oder Federzungen ausgeführt sind, ist auch über einen langen Einsatzzeitraum und insbesondere auch bei einem häufigen Entnehmen und Einsetzen des entnehmbaren Sicherheitsmoduls eine zuverlässige Kontaktierung des Sicherheitsmoduls und dadurch eine zuverlässige galvanische Verbindung zwischen dem Sicherheitsmodul und der Sende- und/oder Empfangseinheit, den weiteren aktiven und/oder passiven elektronischen Bauelementen und/oder der Energiequelle sichergestellt.

In einer vorteilhaften Ausführungsform ist der Halter aus einem unbeweglichen, am Substrat befestigten Halterteil und aus einem beweglichen, am unbeweglichen Halterteil bewegbar, beispielsweise klappbar oder schwenkbar befestigten Halterteil gebildet, wobei das Sicherheitsmodul in das bewegliche Halterteil einsteckbar und mittels des beweglichen Halterteils am unbeweglichen Halterteil fixierbar, beispielsweise einrastbar und mit der Sende- und/oder Empfangseinheit auf dem Substrat galvanisch verbindbar ist. Dies ermöglicht ein einfaches Entnehmen und Einsetzen des entnehmbaren Sicherheitsmoduls und dessen zuverlässige Halterung, Fixierung und Kontaktierung.

In der Ausführungsform des elektronischen Datenübertragungsgerätes, in welcher der Halter als eine Gehäuseausformung ausgebildet ist, ist der Halter beispielsweise als ein Fach direkt im Gehäuse zum Einschieben oder Einlegen des Sicherheitsmoduls ausgeformt. Vorzugsweise sind dann auch die Kontakte zur galvanischen und zweckmäßigerweise auch mechanischen Verbindung des Sicherheitsmoduls mit dem Substrat, mit der Sende- und/oder Empfangseinheit, mit den weiteren aktiven und/oder passiven elektronischen Bauelementen und/oder mit der Energiequelle als Federelemente ausgebildet und im Halter federnd angeordnet.

Zweckmäßigerweise ist im Gehäuse ein Fach zur Aufnahme der Energiequelle ausgebildet. Die Energiequelle ist beispielsweise eine elektrochemische Energiequelle, zum Beispiel in Form zumindest einer Batterie oder zumindest eines Akkumulators. Die Batterie kann dabei beispielsweise auch als eine so genannte Knopfzelle ausgebildet sein. Insbesondere die Batterie, aber bevorzugt auch der Akkumulator ist auswechselbar. Des Weiteren kann die Energiequelle zum Beispiel auch als eine oder mehrere Solarzellen oder Brennstoffzellen oder als eine Kombination mehrerer dieser Möglichkeiten ausgebildet sein. Das Gehäuse ist vorzugsweise als ein Gehäuseteil oder als eine Mehrzahl von Gehäuseteilen aus Kunststoff herstellbar, beispielsweise in einem Spritzgießverfahren. Dies ermöglicht eine einfache und kostengünstige Massenproduktion des Gehäuses und eine einfach zu realisierende Ausformung des Gehäuses entsprechend jeweiliger Erfordernisse. Insbesondere ist auf diese Weise auch das Substrat als Teil des Gehäuses einstückig mit diesem ausbildbar, beispielsweise auf einer Gehäuseinnenseite ausformbar. Auf diese Weise sind auch das Fach zur Aufnahme der Energiequelle und beispielsweise Befestigungsmöglichkeiten für das Substrat, wenn es als eigenständiges Bauteil ausgebildet ist, einfach und kostengünstig ausformbar. Auch der Halter und/oder das Substrat sind aus Kunststoff herstellbar, vorzugsweise ebenfalls im Spritzgießverfahren, mit analogen Vorteilen. Insbesondere sind auf diese Weise auch Halterungen und/oder Führungen für die Kontakte im Halter und/oder im Substrat ausformbar.

Um eine einfache Bedienung des elektronischen Datenübertragungsgerätes und eine einfache Kommunikation zwischen einem Benutzer und dem elektronischen Datenübertragungsgerät zu ermöglichen, weist das Gehäuse vorzugsweise zumindest einen Schalter und/oder zumindest eine optische, akustische und/oder haptische Signaleinrichtung und/oder zumindest eine Anzeigeeinheit und/oder zumindest eine Eingabeeinheit auf. Die Signaleinrichtung kann dabei aus einer oder mehreren Signalleuchten, beispielsweise in Form von Leuchtdioden, als Lautsprecher und/oder als Vibrationselement ausgebildet sein. Die Anzeigeeinheit ist beispielsweise ein Display oder Monitor oder der Lautsprecher. Die Eingabeeinheit ist beispielsweise eine Tastatur oder eine berührungssensitive Anzeigeeinheit, d. h. ein so genannter Touchscreen, so dass eine kombinierte Ausgabe- und Eingabeeinheit realisiert ist. Des Weiteren kann die Eingabeeinheit auch ein Mikrofon sein.

Das elektronische Datenübertragungsgerät weist des Weiteren vorteilhafterweise eine Datenübertragungsschnittstelle für eine externe Datenübertragung und/oder eine Energieübertragungsschnittstelle zum Anschluss an eine externe Energiequelle auf. Die Datenübertragungsschnittstelle ist dabei zweckmäßigerweise als eine galvanische, d. h. als eine drahtgebundene Datenübertragungsschnittstelle ausgeführt. Dabei können diese Schnittstellen getrennt voneinander angeordnet oder auch als eine gemeinsame Schnittstelle ausgebildet sein, beispielsweise als USB-Schnittstelle oder Mini-USB-Schnittstelle, über welche sowohl eine Datenübertragung als auch eine Energieübertragung möglich ist. Mittels der Energieübertragung ist beispielsweise die als Akkumulator ausgebildete interne Energiequelle des elektronischen Datenübertragungsgerätes wieder aufladbar.

In einer vorteilhaften Ausführungsform ist im Gehäuse eine weitere Sende- und/oder Empfangseinheit angeordnet. Dies ermöglicht beispielsweise eine Erhöhung einer Sende- und/oder Empfangsreichweite, da die weitere Sende und/oder Empfangseinheit beispielsweise als Relaisstation einsetzbar ist. Auch diese weitere Sende und/oder Empfangseinheit kann als Antenne und/oder als induktive und/oder als kapazitive Sende- und/oder Empfangseinheit ausgebildet sein.

Ausführungsbeispiele der Erfindung werden im Folgenden anhand einer Zeichnung näher erläutert.

Darin zeigt:

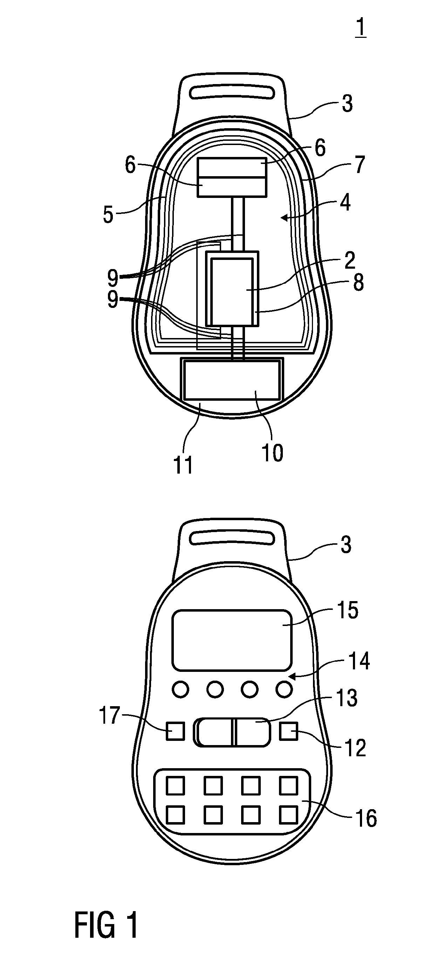

- Figur 1: ein elektronisches Datenübertragungsgerät mit einem als eine entnehmbare Einheit ausgebildeten Sicherheitsmodul in einem geöffneten Zustand.

**Figur 1** zeigt ein elektronisches Datenübertragungsgerät 1 mit einem als eine entnehmbare Einheit ausgebildeten Sicherheitsmodul 2. Das elektronische Datenübertragungsgerät 1, welches in diesem Ausführungsbeispiel als ein Schlüsselanhänger ausgebildet ist, weist ein Gehäuse 3 auf, welches in einem geöffneten Zustand dargestellt ist.

Im Inneren des Gehäuses 3 ist eine Transpondereinheit 4 angeordnet. Diese Transpondereinheit 4 umfasst eine Sende- und/oder Empfangseinheit 5 in Form einer als Spule ausgebildeten Antenne, so dass die dargestellte Sende- und/oder Empfangseinheit 5 beispielsweise als eine induktive Sende- und/oder Empfangseinheit fungieren kann. In weiteren, nicht näher dargestellten Ausführungsformen ist auch ein Einsatz einer kapazitiven Sende- und/oder Empfangseinheit möglich.

Des Weiteren umfasst die Transpondereinheit 4 weitere aktive und/oder passive Bauelemente 6, wobei sowohl diese Bauelemente 6 als auch die Sende- und/oder Empfangseinheit 5 auf einem gemeinsamen Substrat 7 angeordnet sind. Dieses Substrat 7 kann als eigenständiges Bauteil ausgebildet und im Gehäuse 3 befestigt sein oder als Teil des Gehäuses 3, d. h. auf einer Innenseite des Gehäuses 3 ausgeformt sein.

Des Weiteren ist in der dargestellten Ausführungsform auf dem Substrat 7 ein Halter 8 für das Sicherheitsmodul 2 angeordnet. Das als entnehmbare Einheit ausgebildete Sicherheitsmodul 2 ist in der dargestellten Ausführungsform in den Halter 8 eingesetzt und fixiert. In einer weiteren, hier nicht näher dargestellten Ausführungsform kann der Halter 8 auch als eine Gehäuseausformung ausgebildet sein, beispielsweise als ein Fach direkt im Gehäuse 3 zum Einschieben oder Einlegen des Sicherheitsmoduls 2.

Der Halter 8 weist Kontakte 9 in Form von Federelementen auf, welche im hier dargestellten Beispiel als unter das Sicherheitsmodul 2 ragende Federzungen ausgebildet sind, die im in den Halter 8 eingesetzten und fixierten Zustand des Sicherheitsmoduls 2 aufgrund ihrer Federspannung gegen eine Unterseite des Sicherheitsmoduls 2 gepresst sind und an diesem anliegen. Das Sicherheitsmodul 2 weist hier nicht näher dargestellte Anschlüsse zur Kontaktierung einer internen Schaltung, beispielsweise eines Halbleiters des Sicherheitsmoduls 2 auf.

Mittels der Kontakte 9, welche an die Anschlüsse an der Unterseite des Sicherheitsmoduls 2 gepresst und dadurch mit diesen kontaktiert sind, ist das in den Halter 8 eingesetzte und fixierte Sicherheitsmodul 2, d. h. dessen interne Schaltung, mit der Transpondereinheit 4, d. h. mit deren Sende- und/oder Empfangseinheit 5 und aktiven und/oder passiven elektronischen Bauelementen 6 sowie mit einer Energiequelle 10 des elektronischen Datenübertragungsgerätes 1 galvanisch verbunden. Dadurch ist eine Datenübertragung zwischen der Transpondereinheit 4, insbesondere deren Sende- und/oder Empfangseinheit 5, und dem Sicherheitsmodul 2 und eine Energieübertragung zwischen der Energiequelle 10 und dem Sicherheitsmodul 2 ermöglicht.

Durch die als Federelemente ausgebildeten Kontakte 9 ist auch über einen langen Einsatzzeitraum und insbesondere auch bei einem häufigen Entnehmen und Einsetzen des entnehmbaren Sicherheitsmoduls 2 eine zuverlässige Kontaktierung des Sicherheitsmoduls 2 und dadurch eine zuverlässige galvanische Verbindung zwischen dem Sicherheitsmodul 2 und der Sende- und/oder Empfangseinheit 5, den weiteren aktiven und/oder passiven elektronischen Bauelementen 6 und der Energiequelle 10 sichergestellt.

Der Halter 8 ist beispielsweise, hier nicht näher dargestellt, aus einem unbeweglichen, am Substrat 7 befestigten Halterteil und aus einem beweglichen, am unbeweglichen Halterteil bewegbar, beispielsweise klappbar oder schwenkbar befestigten Halterteil gebildet, wobei das Sicherheitsmodul 2 in das bewegliche Halterteil einsteckbar und mittels des beweglichen Halterteils am unbeweglichen Halterteil fixierbar, beispielsweise einrastbar und mit der Sende- und/oder Empfangseinheit 5 und den weiteren aktiven und/oder passiven elektronischen Bauelementen 6 auf dem Substrat 7 sowie mit der Energiequelle 10 galvanisch verbindbar ist. Dies ermöglicht ein einfaches Entnehmen und Einsetzen des entnehmbaren Sicherheitsmoduls 2 und dessen zuverlässige Halterung, Fixierung und Kontaktierung.

Zu diesem Zweck sowie um ein Auswechseln der Energiequelle 10 zu ermöglichen, ist auch das Gehäuse 3 derart gestaltet, dass es auf einfache Weise von einem Benutzer des elektronischen Datenübertragungsgerätes 1 zu öffnen und wieder zu verschließen ist. Beispielsweise sind dazu die dargestellten Gehäuseteile miteinander verrastet und/oder verschraubt oder es sind hier nicht dargestellte, sinnvollerweise verschließbare Öffnungen in das Gehäuse 3 eingebracht.

Das Sicherheitsmodul 2 ist beispielsweise als eine Ausstanzung aus einer so genannten ID 1-Chipkarte ausgebildet, zum Beispiel in Form einer ID-000-Chipkarte, auch als SIM-Karte oder Plug-Karte bezeichnet. Es sind jedoch, je nach Erfordernissen und Einsatz- und Verwendungszweck auch andere, kleinere oder größere Formen vorteilhaft einsetzbar.

Mittels des elektronischen Datenübertragungsgerätes 1, d. h. mittels der Transpondereinheit 4 und dem Sicherheitsmodul 2 ist auf sehr einfach herzustellende und sehr kostengünstige Weise beispielsweise eine Zahl- oder Buchungsfunktion oder eine Identifikationsfunktion realisierbar, zum Beispiel für eine Zugangskontrolle zu einem Gebäude, einem Fahrzeug, einem öffentlichen Transportmittel, einem Gelände, einem System oder einer Maschine oder Vorrichtung. Dabei ist die Transpondereinheit 4 über das Sicherheitsmodul 2 steuerbar und/oder regelbar und/oder es ist ein Zugang zur Transpondereinheit 4 zur Datenübertragung von der Transpondereinheit 4 und/oder zur Transpondereinheit 4 und/oder über die Transpondereinheit 4 absicherbar. Dabei wird mittels der Transpondereinheit 4 und deren Sende- und/oder Empfangseinheit 5 eine drahtlose Datenübertragung ermöglicht.

Um eine Sende- und/oder Empfangsreichweite der drahtlosen Datenübertragung zu erhöhen, kann im Gehäuse 3 eine hier nicht näher dargestellte weitere Sende- und/oder Empfangseinheit angeordnet sein, welche beispielsweise als Relaisstation einsetzbar ist. Auch diese weitere Sende und/oder Empfangseinheit kann als Antenne und/oder als induktive und/oder als kapazitive Sende- und/oder Empfangseinheit ausgebildet sein.

Insbesondere aufgrund der störunanfälligen galvanischen Verbindung zwischen dem Sicherheitsmodul 2 und dem Transpondermodul 4, d. h. dessen Sende- und/oder Empfangseinheit 5 und weiteren aktiven und/oder passiven elektronischen Bauelementen 6 sowie aufgrund der galvanischen Verbindung zur Energiequelle 10 ist eine ordnungsgemäße und zuverlässige Funktion über einen langen Einsatzzeitraum sichergestellt.

Für die geschilderten Funktionen und Einsatzzwecke ist die Ausformung des elektronischen Datenübertragungsgerätes 1 als Schlüsselanhänger besonders vorteilhaft, da es klein und leicht ist und an beispielsweise täglich benötigten Schlüsseln befestigbar ist, so dass es stets mitführbar und dadurch, wenn benötigt, stets griffbereit ist.

Die im elektronischen Datenübertragungsgerät 1 sinnvollerweise auswechselbar angeordnete Energiequelle 10 ist im hier dargestellten Beispiel in einem im Gehäuse 3 ausgebildeten Fach 11 angeordnet. Es handelt sich dabei beispielsweise um eine elektrochemische Energiequelle in Form einer Batterie oder eines wieder aufladbaren Akkumulators.

Bei einem Akkumulator ist des Weiteren eine Kombination mit Solarzellen oder einer Brennstoffzelle sinnvoll, um diesen wieder aufzuladen. Alternativ oder zusätzlich ist auch eine Energieübertragungsschnittstelle 12 zum Anschluss an eine externe Energiequelle sinnvoll.

Das Gehäuse 3 und/oder das Substrat 7 und/oder der Halter 8 sind beispielsweise aus Kunststoff gefertigt, insbesondere in einem Spritzgießverfahren. Dies ermöglicht eine einfache Ausformung entsprechend den jeweiligen Erfordernissen und eine kostengünstige Massenfertigung. Dadurch sind auf einfache Weise beispielsweise das Fach 11 zur Aufnahme der Energiequelle 10, das Substrat 7 als eigenständiges Bauteil oder als Teil des Gehäuses 3 und Halterungen und Führungen für die Kontakte 9 im Halter 8 ausformbar.

Um eine einfache Bedienung des elektronischen Datenübertragungsgerätes 1 und eine einfache Kommunikation zwischen dem Benutzer und dem elektronischen Datenübertragungsgerät 1 zu ermöglichen, weist das Gehäuse 3 verschiedene Möglichkeiten zur Kommunikation zwischen dem Benutzer und dem elektronischen Datenübertragungsgerät 1 auf. In der dargestellten Ausführungsform sind diese beispielhaft als ein Schalter 13, eine optische Signaleinrichtung 14 in Form mehrerer Leuchtdioden, eine Anzeigeeinheit 15 in Form eines Displays und eine Eingabeeinheit 16 in Form einer Tastatur dargestellt.

Des Weiteren kann die Signaleinrichtung 14 beispielsweise auch eine haptische Signaleinrichtung 14 in Form eines Vibrationselementes oder eine akustische Signaleinrichtung 14 in Form eines Lautsprechers sein. Die Eingabeeinheit 16 kann des Weiteren auch ein Mikrofon sein. Vorteilhaft ist auch der Einsatz einer berührungssensitiven Anzeigeeinheit 15, d. h. eines so genannten Touchscreens, so dass eine kombinierte Eingabe- und Ausgabeeinheit ermöglicht ist.

Um das elektronische Datenübertragungsgerät 1 derart zu gestalten, dass es möglichst klein, leicht, kompakt und einfach zu bedienen ist, so dass es als einen Benutzer nicht störender kleiner und leichter Schlüsselanhänger ausformbar ist, ist eine möglichst geringe Anzahl von Bedien-, Eingabe-, Ausgabe- und Signalelementen sinnvoll. Daher ist es sinnvoll, deren Anzahl und Ausbildung an jeweilige Erfordernisse des elektronischen Datenübertragungsgerätes 1 anzupassen.

Zusätzlich zu der bereits erwähnten Energieübertragungsschnittstelle 12 weist das dargestellte elektronische Datenübertragungsgerät 1 eine Datenübertragungsschnittstelle 17 für eine externe Datenübertragung auf, welche als eine galvanische, d. h. als eine drahtgebundene Datenübertragungsschnittstelle 17 ausgeführt ist. Im dargestellten Beispiel sind die Energieübertragungsschnittstelle 12 und die Datenübertragungsschnittstelle 17 getrennt voneinander ausgebildet und angeordnet. Sie können aber auch als eine gemeinsame Schnittstelle ausgebildet sein, beispielsweise als USB-Schnittstelle oder Mini-USB-Schnittstelle, über welche sowohl eine Datenübertragung als auch eine Energieübertragung möglich ist.

### BEZUGSZEICHENLISTE

- 1: elektronisches Datenübertragungsgerät
- 2: Sicherheitsmodul
- 3: Gehäuse
- 4: Transpondereinheit
- 5: Sende- und/oder Empfangseinheit
- 6: Bauelement
- 7: Substrat
- 8: Halter
- 9: Kontakt
- 10: Energiequelle
- 11: Fach
- 12: Energieübertragungsschnittstelle
- 13: Schalter
- 14: Signaleinrichtung
- 15: Anzeigeeinheit
- 16: Eingabeeinheit
- 17: Datenübertragungsschnittstelle

## Patentansprüche

1. Elektronisches Datenübertragungsgerät (1) mit einem als entnehmbare Einheit ausgebildeten Sicherheitsmodul (2) und einem als Schlüsselanhänger ausgebildeten Gehäuse (3), wobei im Gehäuse (3) eine Transpondereinheit (4) angeordnet ist, die ein Substrat (7) umfasst, auf welchem eine Sende- und/oder Empfangseinheit (5) und weitere aktive und/oder passive elektronische Bauelemente (6) angeordnet sind, wobei ein Halter (8) für das Sicherheitsmodul (2) auf dem Substrat angeordnet und/oder als eine Gehäuseausformung ausgebildet ist und wobei das Sicherheitsmodul (2), wenn es in den Halter (8) eingesetzt und fixiert ist, mit der auf dem Substrat (7) angeordneten Sende- und/oder Empfangseinheit (5) und mit den weiteren aktiven und/oder passiven elektronischen Bauelementen (6) und/oder mit einer Energiequelle (10) galvanisch verbunden ist, wobei Kontakte (9) zur galvanischen Verbindung des Sicherheitsmoduls (2) mit der Sende- und/oder Empfangseinheit (5), mit den weiteren aktiven und/oder passiven elektronischen Bauelementen (6) und/oder mit der Energiequelle (10) als Federelemente ausgebildet und am Substrat (7) und/oder am Halter (8) befestigt sind und wobei das Gehäuse (3), das Substrat (7) und/oder der Halter (8) mittels eines Spritzgießverfahrens aus Kunststoff gefertigt ist/sind.

2. Elektronische Datenübertragungsgerät (1) nach Anspruch 1,
**dadurch gekennzeichnet, dass** die Sende- und/oder Empfangseinheit (5) als eine Antenne, als eine induktive Sende- und/oder Empfangseinheit und/oder als eine kapazitive Sende- und/oder Empfangseinheit ausgebildet ist.

3. Elektronisches Datenübertragungsgerät (1) nach Anspruch 1 oder 2,
**dadurch gekennzeichnet, dass** der Halter (8) aus einem unbeweglichen, am Substrat (7) befestigten Halterteil und aus einem beweglichen, am unbeweglichen Halterteil bewegbar befestigten Halterteil gebildet ist, wobei das Sicherheitsmodul (2) in das bewegliche Halterteil einsteckbar und mittels des beweglichen Halterteils am unbeweglichen Halterteil fixierbar und mit der Sende- und/oder Empfangseinheit (5) auf dem Substrat (7) galvanisch verbindbar ist.

4. Elektronisches Datenübertragungsgerät (1) nach einem der vorhergehenden Ansprüche,
**dadurch gekennzeichnet, dass** im Gehäuse (3) ein Fach (11) zur Aufnahme der Energiequelle (10) ausgebildet ist.

5. Elektronisches Datenübertragungsgerät (1) nach einem der vorhergehenden Ansprüche,
**dadurch gekennzeichnet, dass** das Gehäuse (3) zumindest einen Schalter (13) und/oder zumindest eine optische, akustische und/oder haptische Signaleinrichtung (14) und/oder zumindest eine Anzeigeeinheit (15) und/oder zumindest eine Eingabeeinheit (16) aufweist.

6. Elektronisches Datenübertragungsgerät (1) nach Anspruch 5,
**dadurch gekennzeichnet, dass** die Eingabeeinheit (16) und die Anzeigeeinheit (15) kombiniert als berührungssensitive Anzeigeeinheit (15) ausgeführt ist.

7. Elektronisches Datenübertragungsgerät (1) nach einem der vorhergehenden Ansprüche,
**gekennzeichnet durch** zumindest eine Datenübertragungsschnittstelle (17) für eine externe Datenübertragung und/oder eine Energieübertragungsschnittstelle (12) zum Anschluss an eine externe Energiequelle.

8. Elektronisches Datenübertragungsgerät (1) nach Anspruch 6,
**dadurch gekennzeichnet, dass** die Datenübertragungsschnittstelle (17) für die externe Datenübertragung und die Energieübertragungsschnittstelle (12) zum Anschluss an die externe Energiequelle als gemeinsame Schnittstelle ausgebildet ist.

9. Elektronisches Datenübertragungsgerät (1) nach einem der vorhergehenden Ansprüche,
**dadurch gekennzeichnet, dass** im Gehäuse (3) eine weitere Sende- und/oder Empfangseinheit angeordnet ist.

10. Elektronisches Datenübertragungsgerät (1) nach einem der vorhergehenden Ansprüche,
**dadurch gekennzeichnet, dass** weitere Sende- und/oder Empfangseinheit als eine induktive Sende- und/oder Empfangseinheit und/oder als eine kapazitive Sende- und/oder Empfangseinheit ausgebildet ist.

11. Elektronisches Datenübertragungsgerät (1) nach einem der vorhergehenden Ansprüche,
**dadurch gekennzeichnet, dass** am Gehäuse (3) zumindest eine Solarzelle angeordnet ist, die als Energiequelle (10) oder zum Aufladen der Energiequelle (10) dient.

12. Verwendung eines Datenübertragungsgeräts (1) nach einem der vorhergehenden Ansprüche zur Durchführung einer Zahl-, Buchungs- oder Identifikationsfunktion.

13. Verwendung eines Datenübertragungsgeräts (1) nach Anspruch 12,
**dadurch gekennzeichnet dass** die Identifikationsfunktion eine Zugangskontrolle zu einem Gebäude, einem Fahrzeug, einem öffentlichen Transportmittel, einem Gelände, einem System, einer Maschine oder einer Vorrichtung umfasst.

14. Verwendung eines Datenübertragungsgeräts (1) nach Anspruch 12 oder 13,
**dadurch gekennzeichnet, dass** das Datenübertragungsgerät (1) als Relaisstation eingesetzt wird, so dass eine Erhöhung einer Sende- und/oder Empfangsreichweite erreicht wird.

## Claims

1. Electronic data transmission device (1) having a security module (2) in the form of a removable unit and having a housing (3) in the form of a key fob, a transponder unit (4) being arranged in the housing (3), which transponder unit comprises a substrate (7) on which a transmitting and/or receiving unit (5) and further active and/or passive electronic components (6) are arranged, a holder (8) for the security module (2) being arranged on the substrate and/or being designed as a housing form, and the security module (2), when it has been inserted and fixed into the holder (8), being electrically connected to the transmitting and/or receiving unit (5) arranged on the substrate (7) and to the further active and/or passive electronic components (6) and/or to an energy source (10), contacts (9) for electrically connecting the security module (2) to the transmitting and/or receiving unit (5), to the further active and/or passive electronic components (6) and/or to the energy source (10) being in the form of spring elements and being fastened to the substrate (7) and/or to the holder (8), and the housing (3), the substrate (7) and/or the holder (8) being produced from plastic using an injection moulding method.

2. Electronic data transmission device (1) according to Claim 1,
**characterized in that** the transmitting and/or receiving unit (5) is in the form of an antenna, an inductive transmitting and/or receiving unit and/or a capacitive transmitting and/or receiving unit.

3. Electronic data transmission device (1) according to Claim 1 or 2,
**characterized in that** the holder (8) is formed from an immovable holder part fastened to the substrate (7) and a movable holder part which is movably fastened to the immovable holder part, the security module (2) being able to be inserted into the movable holder part and being able to be fixed to the immovable holder part by means of the movable holder part and being able to be electrically connected to the transmitting and/or receiving unit (5) on the substrate (7).

4. Electronic data transmission device (1) according to one of the preceding claims,
**characterized in that** a compartment (11) for accommodating the energy source (10) is formed in the housing (3).

5. Electronic data transmission device (1) according to one of the preceding claims,
**characterized in that** the housing (3) has at least one switch (13) and/or at least one optical, acoustic and/or haptic signalling device (14) and/or at least one display unit (15) and/or at least one input unit (16).

6. Electronic data transmission device (1) according to Claim 5,
**characterized in that** the input unit (16) and the display unit (15) are combined in the form of a touch-sensitive display unit (15).

7. Electronic data transmission device (1) according to one of the preceding claims,
**characterized by** at least one data transmission interface (17) for external data transmission and/or an energy transmission interface (12) for connection to an external energy source.

8. Electronic data transmission device (1) according to Claim 6,
**characterized in that** the data transmission interface (17) for external data transmission and the energy transmission interface (12) for connection to the external energy source are in the form of a common interface.

9. Electronic data transmission device (1) according to one of the preceding claims,
**characterized in that** a further transmitting and/or receiving unit is arranged in the housing (3).

10. Electronic data transmission device (1) according to one of the preceding claims,
**characterized in that** a further transmitting and/or receiving unit is in the form of an inductive transmitting and/or receiving unit and/or a capacitive transmitting and/or receiving unit.

11. Electronic data transmission device (1) according to one of the preceding claims,
**characterized in that** at least one solar cell which is used as an energy source (10) or to charge the energy source (10) is arranged on the housing (3).

12. Use of a data transmission device (1) according to one of the preceding claims for carrying out a payment, reservation or identification function.

13. Use of a data transmission device (1) according to Claim 12, **characterized in that** the identification function comprises access control to a building, a vehicle, a public means of transport, a site, a system, a machine or an apparatus.

14. Use of a data transmission device (1) according to Claim 12 or 13, **characterized in that** the data transmission device (1) is used as a relay station, with the result that a transmitting and/or receiving range is increased.

## Revendications

1. Appareil électronique (1) de transfert de données doté d'un module de sécurité (2) configuré comme entité amovible et d'un boîtier (3) configuré comme porte-clés,
une unité de transpondeur (4) étant disposée dans le boîtier (3) et présentant un substrat (7) sur lequel une unité d'émission et/ou de réception (5) et d'autres composants électroniques actifs et/ou passifs (6) sont disposés,
un support (8) pour le module de sécurité (2) étant disposé sur le substrat et/ou configuré comme partie formée sur le boîtier,
le module de sécurité (2) inséré et fixé dans le support (8) étant raccordé galvaniquement à l'unité d'émission et/ou de réception (5) disposée sur le substrat (7), aux autres composants électroniques actifs et/ou passifs (6) et/ou à une source d'énergie (10),
des contacts (9) permettant de raccorder galvaniquement le module de sécurité (2) à l'unité d'émission et/ou de réception (5), aux autres composants électroniques actifs et/ou passifs (6) et/ou à la source d'énergie (10) étant configurés comme éléments élastiques et étant fixés sur le substrat (7) et/ou sur le support (8), le boîtier (3), le substrat (7) et/ou le support (8) étant réalisés en matière synthétique par un procédé de moulage par injection.

2. Appareil électronique (1) de transfert de données selon la revendication 1, **caractérisé en ce que** l'unité d'émission et/ou de réception (5) est configurée comme antenne, comme unité d'émission et/ou de réception par induction et/ou comme unité d'émission et/ou de réception capacitive.

3. Appareil électronique (1) de transfert de données selon les revendications 1 ou 2, **caractérisé en ce que** le support (8) est formé d'une partie de support immobile fixée sur le substrat (7) et d'une partie de support mobile fixée de manière mobile sur la partie de support immobile, le module de sécurité (2) pouvant être inséré dans la partie mobile du support et pouvant être fixé sur la partie immobile du support au moyen de la partie mobile du support et raccordé galvaniquement à l'unité d'émission et/ou de réception (5) prévue sur le substrat (7).

4. Appareil électronique (1) de transfert de données selon l'une des revendications précédentes, **caractérisé en ce qu'**un compartiment (11) qui loge la source d'énergie (10) est formé dans le boîtier (3).

5. Appareil électronique (1) de transfert de données selon l'une des revendications précédentes, **caractérisé en ce que** le boîtier (3) présente au moins un commutateur (13) et/ou au moins un dispositif de signalisation optique, acoustique et/ou tactile de signalisation (14) et/ou au moins une unité d'affichage (15) et/ou au moins une unité d'introduction (16).

6. Appareil électronique (1) de transfert de données selon la revendication 5, **caractérisé en ce que** l'unité d'introduction (16) et l'unité d'affichage (15) sont combinées en une unité d'affichage (15) sensible au toucher.

7. Appareil électronique (1) de transfert de données selon l'une des revendications précédentes, **caractérisé par** au moins une interface (17) de transfert de données qui permet un transfert externe de données et/ou par une interface (12) de transfert d'énergie destinée à être raccordée à une source externe d'énergie.

8. Appareil électronique (1) de transfert de données selon la revendication 6, **caractérisé en ce que** l'interface (17) de transfert de données prévue pour le transfert externe de données et l'interface (12) de transmission d'énergie prévue pour être raccordée à la source externe d'énergie sont configurées comme interfaces communes.

9. Appareil électronique (1) de transfert de données selon l'une des revendications précédentes, **caractérisé en ce qu'**une autre unité d'émission et/ou de réception est disposée dans le boîtier (3).

10. Appareil électronique (1) de transfert de données selon l'une des revendications précédentes, **caractérisé en ce que** l'autre unité d'émission et/ou de réception est configurée comme unité d'émission et/ou de réception inductive, et/ou comme unité d'émission et/ou de réception capacitive.

11. Appareil électronique (1) de transfert de données selon l'une des revendications précédentes, **caractérisé en ce qu'**au moins une cellule solaire qui sert de source d'énergie (10) ou à charger la source d'énergie (10) est disposée sur le boîtier (3).

12. Utilisation d'un appareil (1) de transfert de données selon l'une des revendications précédentes pour l'exécution de fonctions de comptage, d'enregistrement ou d'identification.

13. Utilisation d'un appareil (1) de transfert de données selon la revendication 12, **caractérisée en ce que** la fonction d'identification comporte un contrôle d'accès à un bâtiment, un véhicule, un moyen de transport public, un terrain, un système, une machine ou un dispositif.

14. Utilisation d'un appareil (1) de transfert de données selon les revendications 12 ou 13, **caractérisée en ce que** l'appareil (1) de transfert de données est utilisé comme poste-relai de manière à obtenir une augmentation de la portée d'émission et/ou de réception.
